# EUROPÄISCHE PATENTSCHRIFT

(11) **EP 0 499 068 B1**
(45) Veröffentlichungstag und Bekanntmachung des Hinweises auf die Patenterteilung: **10.07.1996**
(21) Anmeldenummer: 92101120.1
(22) Anmeldetag: 24.01.1992
(51) Int. Cl.: C08F 8/00, C08F 8/14, C08F 8/30, C08G 81/02, C10G 33/04, B01D 17/04

(54) **Reduktionsprodukte aus Alkoxilaten und vinylischen Monomeren, Verfahren zu ihrer Herstellung und ihre Verwendung als Demulgatoren für Rohölemulsionen**
Reaction products of alkoxylates and vinyl monomers, process for their preparation and their use as demulsifiers for crude oil emulsions
Produits de réaction d'alkoxylates et de monomères vinyliques, procédé pour leur préparation et leur utilisation comme désémulsifiants pour émulsions de pétrole brut

(30) Priorität: 15.02.1991 DE 4104610
(43) Veröffentlichungstag der Anmeldung: 19.08.1992
(73) Patentinhaber: BASF Aktiengesellschaft, D-67063 Ludwigshafen (DE)
(72) Erfinder: Konrad, Gerd, Dr., W-6703 Limburgerhof (DE); Hartmann, Heinrich, Dr., W-6703 Limburgerhof (DE); Elfers, Guenther, W-6943 Birkenau (DE); Vogel, Hans-Henning, Dr., W-6710 Frankenthal (DE); Raubenheimer, Hans-Juergen, W-6834 Ketsch (DE)

(56) Entgegenhaltungen:
- DE-A- 3 635 489
- DE-C- 3 513 550
- US-A- 4 138 381
- US-A- 4 626 379
- US-A- 4 968 449

## Beschreibung

Die Erfindung betrifft Reaktionsprodukte aus vorwiegend hydrophoben Alkoxilaten und vorwiegend hydrophilen, vinylischen Monomeren, ein Verfahren zu ihrer Herstellung und ihre Verwendung als Erdölemulsionsspalter zur Schnellentwässerung von Rohölen.

Bei der Förderung von Rohölen wird mit zunehmender Ausbeutung der Lagerstätten ein steigender Anteil an Wasser mit gefördert. In den Rohölen enthaltene, oberflächenaktive Substanzen emulgieren den größten Teil des Wassers, wobei sich stabile Wasser-in-Öl-Emulsionen bilden. Im Emulsionswasser können Salze gelöst sein, die bei der Weiterverarbeitung des Rohöls in der Raffinerie zu Korrosionsproblemen führen. Das Emulsionswasser muß deshalb vor dem Transport abgetrennt bzw. unter eine akzeptable Konzentration gesenkt werden. Dies erfolgt meist durch den Zusatz sogenannter Erdölemulsionsspalter, wobei eine Erwärmung des Rohöls die Auftrennung erleichtert und beschleunigt.

Die Rohöle unterscheiden sich je nach ihrer Provinienz stark in ihrer Zusammensetzung. Die in den Rohölen enthaltenen, natürlichen Emulgatoren besitzen zudem einen komplizierten chemischen Aufbau, so daß zur Überwindung ihrer Wirkung selektiv Erdölemulsionsspalter (Demulgatoren) entwickelt werden müssen. Durch die Erschließung neuer Rohölfelder sowie durch geänderte Förderbedingungen bei älteren Feldern werden ständig neue Demulgatoren benötigt, die eine schnellere Auftrennung in Wasser und Öl sowie möglichst niedrige Restwasser- und Restsalzmengen bewirken.

Die am häufigsten angewendeten Demulgatoren sind Ethylenoxid/Propylenoxid-Blockcopolymere, alkoxilierte Alkylphenol-Formaldehyd-Harze, alkoxilierte Polyamine sowie Vernetzungsprodukte der obigen Grundklassen mit multifunktionellen Reagentien, wie z.B. Diisocyanaten, Dicarbonsäuren, Bisglycidylethern, Di- und Trimethylolphenol.

Bekannt sind auch "polymere" Erdölemulsionsspalter (Kanadische Patentschrift 10 10 740 und DE-C1 33 38 923). Gemäß dieser kanadischen Patentschrift werden in alkoxilierte Alkohole und alkoxilierte Alkylphenolformaldehydharze durch Veretherung mit ungesättigten Diglycidylverbindungen (z.B. Glycidylacrylat), durch Veresterung mit Maleinsäureanhydrid oder Fumarsäure oder durch Umesterung mit Acrylsäure- oder Methacrylsäureestern ungesättigte, radikalisch polymerisierbare Funktionen eingeführt, welche in einer anschließenden Reaktion mit anderen Monomeren in Lösung polymerisiert werden. In DE-C1 33 38 923 werden Produkte beschrieben, welche aus einer Copolymerisation von Polyoxialkylenethern des Allyl- bzw. Methallylalkohols mit Vinylestern oder Acrylsäure- bzw. Methacrylsäureestern erhalten werden. Alle diese Produkte zeigen wirkungsspezifische oder herstellbedingte Schwächen. So kommt es bei Verwendung von Glycidylverbindungen zur Einführung der ungesättigten Funktionen bei der Polymerisation häufig zur Bildung von Gelkörpern und Inhomogenitäten, bei Derivaten des Allylalkohols, Methallylalkohols und Maleinsäure ergeben sich schlechte Copolymerisationsbedingungen. Des weiteren kommt es häufig zu Vergelungs- und Verfestigungsreaktionen, insbesondere durch Verwendung von multifunktionellen Ausgangsalkoholen bei der Alkoxilierung.

Die DE 36 35 489-A1 beschreibt Copolymere aus hydrophoben Acrylsäure- oder Methacrylsäureestern und hydrophilen Monomeren. Die Herstellung der hydrophoben Ester erfolgt durch sauer katalysierte azeotrope Veresterung von Alkoxilaten ein- oder mehrwertiger Alkohole bzw. Alkylphenol/Aldehyd-Kondensationsprodukten mit (Meth)acrylsäure. Nach der Copolymerisation der hydrophoben Ester mit hydrophilen Monomeren werden die freien OH-Gruppen in eine nicht mehr reaktive Form überführt und/oder die Katalysatorsäure mit einem tertiären Amin neutralisiert. Die Herstellung dieser Produkte ist zeitlich aufwendig, da die Veresterung des Alkoxilats mit (Meth)acrylsäure mehrere Stunden in Anspruch nimmt. Bei der Veresterung von Alkoxilaten mehrwertiger Alkohole ist es nicht möglilch, selektiv den Monoester herzustellen, so daß sich durch das Vorhandensein mehrfunktioneller Acrylate bei der Copolymerisation mit hydrohpilen Monomeren leicht unlösliche Gele bilden.

Aus der EP 0 331 323-A2 sind Demulgatoren bekannt, die jedoch auf Stickstoff-Verbindungen basieren und zu deren Herstellung lange Reaktionszeiten erforderlich sind.

In der US-A 4 626 379 werden vernetzte Reaktionsprodukte von Mischungen von Polyalkoxylaten, wobei mindestens eines dieser Polyalkoxylate aus Polyoxyalkylenglykolen und Diglycidylethern wie Bisphenol A-Diglycidylethern erhalten wird, mit Vinylmonomeren wie Acrylsäure als Demulgatoren für Wasser-in-Öl-Emulsionen, z.B. Rohölemulsionen, beschrieben.

Aufgabe der vorliegenden Erfindung ist es, Demulgatoren zur Verfügung zu stellen, die eine möglichst schnelle Auftrennung in Wasser und Öl sowie möglichst niedrige Restwassermengen liefern, lagerbeständig sind und einfach sowie in geringen Reaktionszeiten herstellbar sind.

überraschenderweise wurde nun gefunden, daß Produkte mit besserer Demulgatorwirksamkeit und erhöhter Lagerstabilität in kurzer Reaktionszeit erhalten werden, wenn vinylische Monomere in Gegenwart eines oder mehrerer Alkoxilate polymerisiert werden, ohne daß in die Alkoxilate vorher ungesättigte, radikalisch polymerisierbare funktionelle Gruppen eingeführt wurden und nach erfolgter Polymerisation ein Kondensationsschritt durchgeführt wird oder wenn die Alkoxilate mit Polymerisaten, hergestellt aus vinylischen Monomeren, kondensiert werden.

Gegenstand der Anmeldung sind daher Reaktionsprodukte aus Alkoxilaten und vinylischen Monomeren, erhalten durch
a) Polymerisation von einem oder mehreren vinylischen Monomeren der allgemeinen Formel I 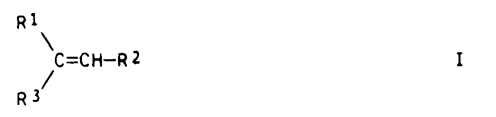
   in der R¹ Wasserstoff oder die Reste -COOH, -COOC₂H₅OH, -COOC₃H₇OH, -COO-R⁴-N(R⁵)₂, -CO-NH-R⁴-N(R⁵)₂, -CONH₂, -CN, -Phenyl, -O-CO-R⁴, -Pyridyl, 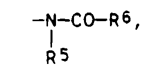 -COCH₃, -COOR⁷, -O-R⁷, -O-R⁷-OH, -R⁷, -Imidazoyl, 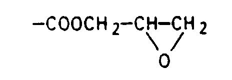
   R² wasserstoff oder -COOH bedeuten und R¹ und R² zusammen einen Anhydridring bilden können,
   R³ Wasserstoff oder CH₃, wobei R¹, R² und R³ nicht gleichzeitig Wasserstoff sind,
   R⁴ eine Alkyl- oder Alkylengruppe mit 1 bis 4 C-Atomen
   R⁵ und R⁶ unabhängig voneinander Wasserstoff oder eine C₁-C₄-Alkylgruppe, wobei R⁵ und R⁶ zusammen auch einen 5-6gliedrigen Ring bilden können, und
   R⁷ eine Alkyl-, Hydroxialkyl- oder Alkylengruppe mit 1 bis 30 C-Atomen bedeuten,
   in Gegenwart von einem oder mehreren Alkoxilaten der allgemeinen Formel II

   R⁸-O-[R⁹-O]ₓ-H II

   in der R8 den Rest eines ein- oder mehrwertigen Alkohols, Phenols oder Alkylphenols mit 1-30 C-Atomen oder den Rest eines Alkylphenol/Formaldehyd- oder Alkyphenol/Acetaldehyd-Kondensationsproduktes, R⁹ eine Ethylen-, Propylen-, 1,2-Butylen- oder 1,4-Butylengruppe und x eine Zahl zwischen 5 und 120 bedeutet, wobei innerhalb der Polyalkylenoxidketten verschiedene Einheiten [R⁹-O] gemäß obiger Bedeutung von R⁹ in Form von Blöcken oder als statistische Mischungen vorliegen können und x sich auf die Gesamtzahl aller Einheiten [R⁹-O] bezieht und anschließender Kondensation
oder
b) Polymerisation von einem oder mehreren vinylischen Monomeren der oben angegebenen allgemeinen Formel I und
   Kondensation des erhaltenen Copolymerisats mit einem oder mehreren Alkoxilaten der oben angegebenen allgemeinen Formel II,
   wobei in jedem Fall
   - die vinylischen Monomeren zu mindestens 20 Gew.-% funktionelle Gruppen tragen, die nach der erfolgten Polymerisation mit den Hydroxylgruppen der Alkoxilate eine chemische Reaktion eingehen können,
   - die Kondensation so geführt wird, daß nicht alle Hydroxylgruppen umgesetzt werden, und
   - das Gewichtsverhältnis von Alkoxilaten II zur Summe der vinylischen Monomeren I zwischen 300 : 1 und 1 : 50 liegt.

Bevorzugt sind Reaktionsprodukte, bei deren Herstellung als vinylische Monomere der allgemeinen Formel I Acrylsäure, Methacrylsäure, Ester oder Amide dieser Säuren, Vinylether, Acrylnitril, Vinylpyrrolidon oder Mischungen aus diesen Monomeren eingesetzt werden. Besonders bevorzugt wird Acrylsäure in einer Menge von 50-100 Gew.-%, bezogen auf die Gesamtmenge an vinylischen Monomeren eingesetzt.

Die zur Herstellung der erfindungsgemäßen Reaktionsprodukte geeigneten Alkoxilate enthalten keinen Stickstoff.

Bevorzugt sind Blockcopolymerisate, die aus mehrwertigen Alkoholen durch Umsetzung mit Propylenoxid und danach mit Ethylenoxid erhalten werden, wobei das Gewichtsverhältnis von Propylenoxid zu Ethylenoxid zwischen 10 : 1 und 1 : 10, besonders bevorzugt 5 : 1 und 1 : 8 liegt.

Zur Herstellung der erfindungsgemäßen Polymeren können ein oder mehrere Alkoxilate sowie ein oder mehrere vinylische Monomere verwendet werden. Vorzugsweise werden hydrophile vinylische Monomere eingesetzt, wobei bei Verwendung von mehreren Monomeren auch bis zu 60 Gew.-% hydrophobe Monomere in der Monomermischung enthalten sein können. Die hydrophilen Monomeren müssen zu mindestens 20 Gew.-%, bevorzugt 40 Gew.-% und besonders bevorzugt 60 Gew.-% funktionelle Gruppen tragen, die nach erfolgter Polymerisation mit den Hydroxylgruppen der Alkoxilate eine chemische Reaktion eingehen können.

Beispiele für geeignete vinylische Monomere sind Acrylsäure, Methacrylsäure, Methyl(meth)acrylat, Ethyl(meth)acrylat, iso-Butyl(meth)acrylat, Laurylacrylat, Hydroxiethyl(meth)acrylat, Diethylaminoethylacrylat, Di-ethylaminoethylmethacrylamid, Glycidylmethacrylat, Vinylformamid, Vinylacetat, Vinylpropionat, Styrol, Isobuten, Trimethylpenten, Allylalkohol, Vinylmethylether, Vinyl-4-Hydroxibutylether, Vinylimidazol, Vinylpyrrolidon, Maleinsäure, Fumarsäure. Besonders bevorzugt sind Acrylsäure bzw. Monomermischungen, die mindestens 50 Gew.-% Acrylsäure enthalten.

Das Gewichtsverhältnis von Alkoxilat zur Summe der vinylischen Monomeren liegt zwischen 300 : 1 und 1 : 50, bevorzugt zwischen 100 : 1 und 1 : 10 und besonders bevorzugt zwischen 30 : 1 bis 1 : 1.
A) Herstellung der Alkoxilate (DE 36 35 489-A1, S. 5, 32-67)
   Die Darstellung der alkoxilierten Alkohole gelingt in bekannter Weise durch Umsetzung des mono- oder multifunktionellen Alkohols mit einem Alkoxid oder einer Mischung aus mehreren Alkoxiden oder blockweise mit mehreren Alkoxiden unter Zuhilfenahme basischer Katalysatoren bei Temperaturen von 80 bis 160°C. Als Alkohole kommen z.B. in Betracht Ethanol, Butanol, Isopropanol, Talgfettalkohol, Stearylalkohol, Alkylphenole der allgemeinen Formel 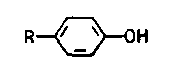 wobei R z.B. C₉H₁₉, CH₃, CH(CH₃)₂, C(CH₃)₃ oder C₆H₁₇ ist, Ethylenglykol, Bisphenol A, Glycerin, Trimethylolpropan, Pentaerythrit, Sorbit, Polyglycerin oder die unten beschriebenen Alkylphenol/Formaldehyd- bzw. Acetaldehyd-Kondensationsprodukte.
   Bevorzugte Alkoxide sind Ethylenoxid, Propylenoxid und 1,2-Butylenoxid oder deren Mischungen.
   Die Reaktionsbedingungen schwanken je nach Art und Menge der verwendeten Alkoxide. Generell liegt die Reaktionstemperatur zwischen 80 bis 160°C und die Menge an basischen Katalysatoren schwankt zwischen 0,25 und 5 %, wobei Kaliumhydroxid und Natriumhydroxid bevorzugt sind. Je nach Konsistenz des Ausgangsalkohols bzw. Endproduktes kann zur Verdünnung ein inertes Lösungsmittel beigefügt werden, welches die Umsetzung nicht beeinflußt. Bevorzugt ist Xylol.
   Das Verhältnis von Alkohol zu Alkoxid(en) kann stark variieren, zweckmäßigerweise jedoch im Bereich von 1 : 120 bis 1 : 5 liegen.
   Alkoxilierte Alkylphenol/Formaldehyd- bzw. Acetaldehyd-Kondensationsprodukte
   Die als Alkohole zur Alkoxilierung verwendeten Alkylphenyl/Formaldehyd- bzw. Acetaldehyd-Harze werden in an sich bekannter Weise durch Umsetzung des Aldehyds mit dem Alkylphenol im Verhältnis 2 : 1 bis 1 : 2, bevorzugt 1 : 1,05 mit Basen- oder Säurekatalyse, bevorzugt Säurekatalyse bei Temperaturen von 80 bis 250°C unter Zuhilfenahme eines hochsiedenden Lösungsmittels zur vollständigen azeotropen Entfernung des sich bildenden Reaktionswassers hergestellt. Als Alkylphenole werden z.B. Nonylphenol, t-Butylphenol oder Octylphenol verwendet, als Aldehyde kommen bevorzugt Formaldehyd und Acetaldehyd zur Anwendung. Als Katalysator wird im allgemeinen eine Alkylsulfonsäure oder Alkylbenzolsulfonsäure, z.B. Dodecylbenzolsulfonsäure in Mengen von 0,2 bis 2 %, vorzugsweise 0,2 bis 0,5 % verwendet.
   Am Anfang der Reaktion wird die Temperatur bei 90 bis 120°C gehalten, bis der Großteil des Reaktionswassers abdestilliert ist. Anschließend wird zur vollständigen Umsetzung bis zum Siedepunkt des Lösungsmittels erhitzt und restliche Wassermengen azeotrop entfernt. Im Mittel enthalten die Moleküle 4 bis 12 aromatische Kerne, bevorzugt 5 bis 9.
   Die so erhaltenen Kondensationsprodukte werden wie oben angegeben alkoxiliert.
   Die reinen Alkoxilate haben in der Regel keine oder nur ganz geringe Wirksamkeit als Erdölemulsionsspalter. Erst durch die Copolymerisation mit den vinylischen Monomeren und den anschließenden Kondensationsschritt bzw. Kondensation der Alkoxilate mit den aus vinylischen Monomeren hergestellten Polymerisaten werden hochwirksame Produkte erhalten.
B) Herstellung der erfindungsgemäßen Polymerisate
   Die Herstellung der erfindungsgemäßen Polymerisate kann prinzipiell nach zwei Wegen erfolgen:
   a) indem die Polymerisation der vinylischen Monomeren in Gegenwart des Alkoxilats erfolgt und sich nach erfolgter Polymerisation ein Kondensationsschritt anschließt,
   b) indem die vinylischen Monomeren getrennt vom Alkoxilat polymerisiert werden und erst vor dem Kondensationsschritt das Alkoxilat zugegeben wird.

   Das Verfahren a) ist in der Regel bevorzugt. Bei diesem Verfahren wird ein Teil der vinylischen Monomeren auf das Alkoxilat gepfropft. Der Pfropfungsgrad hängt dabei sehr stark von den Polymerisationsbedingungen und der Art des Alkoxilats als Pfropfgrundlage ab. Das Vorhandensein von Pfropfcopolymerisat hat sich in vielen Fällen als vorteilhaft erwiesen.
   Das Verfahren b) wird vorzugsweise dann gewählt, wenn vinylische Monomere polymerisiert werden sollen, die sich nicht im Alkoxilat oder Lösungsmitteln, in denen sich das Alkoxilat löst, lösen oder wenn die Monomeren bereits vor erfolgter Polymerisation mit dem Alkoxilat eine derartige chemische Reaktion eingehen würden, wie es bei Verwendung von z.B. Maleinsäureanhydrid als Comonomer der Fall ist.
   Die Polymerisation der vinylischen Monomeren gemäß Variante a) oder b) wird nach den bekannten diskontinuierlichen oder kontinuierlichen Verfahren der radikalischen Polymerisation wie Masse-, Suspensions-, Fällungs- oder Lösungspolymerisation und Initiierung mit üblichen Radikalspendern wie Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis(4-methoxi-2,4-dimethylvaleronitril), tert.-Butylperpivalat, tert.-Butylper-2-ethylhexanoat, tert.-Butylpermaleinat, 2,2'-Azobis(isobutyronitril), Bis(tert.-butylperoxid)cyclohexan, tert.-Butylperoxiisopropylcarbonat, tert.-Butylperacetat, Dicumylperoxid, Di-tert.-amylperoxid, Di-tert.-butylperoxid, p-Menthanhydroperoxid, Cumolhydroperoxid oder tert.-Butylhydroperoxid und Mischungen untereinander durchgeführt. Im allgemeinen werden diese Initiatoren in Mengen von 0,1 bis 20 Gew.-%, vorzugsweise 0,2 bis 15 Gew.-%, berechnet auf die Monomeren, eingesetzt.
   Die Polymerisation erfolgt in der Regel bei Temperaturen von 40 bis 200°C, vorzugsweise 60 bis 150°C, innerhalb von 0,5 bis 10 h, bevorzugt 1 bis 6 h, besonders bevorzugt 2 bis 3 h, wobei bei Verwendung von Lösungsmitteln mit Siedetemperaturen unterhalb der Polymerisationstemperatur zweckmäßig unter Druck gearbeitet wird. Die Polymerisation wird zweckmäßig unter Luftausschluß, d.h. wenn nicht unter Siedebedingungen gearbeitet werden kann, z.B. unter Stickstoff oder Kohlendioxid durchgeführt, da Sauerstoff die Polymerisation verzögert. Durch Mitverwendung von Redox-Coinitiatoren wie Benzoin, Dimethylanilin, Ascorbinsäure sowie organisch löslichen Komplexen von Chrom kann die Reaktion beschleunigt werden. Die üblicherweise eingesetzten Mengen liegen bei 0,1 bis 2000 Gew.-ppm, vorzugsweise 0,1 bis 1000 Gew.-ppm.
   Zur Erzielung niedermolekularer Copolymerer ist es oftmals zweckmäßig, in Gegenwart von Reglern zu arbeiten. Geeignete Regler sind beispielsweise Allylalkohole, wie Buten-1-ol-3, organische Mercaptoverbindungen wie 2-Mercaptoethanol, 2-Mercaptopropanol, Mercaptoessigsäure, Mercaptopropionsäure, tert.-Butylmercaptan, n-Butylmercaptan, n-Octylmercaptan, n-Dodecylmercaptan und tert.-Dodecylmercaptan, die im allgemeinen in Mengen von 0,1 bis 10 Gew.-% eingesetzt werden.
   Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rohrreaktoren und statische Mischer.
   Die einfachste Polymerisationsmethode ist die Massepolymerisation. Dabei werden die Monomeren in Gegenwart eines Initiators und in Abwesenheit von Lösungsmitteln polymerisiert. Zweckmäßigerweise mischt man alle Monomeren in der gewünschten Zusammensetzung und legt einen kleinen Teil, z.B. ca. 5 bis 10 % zusammen mit dem Alkoxilat (nach Verfahren a)), im Reaktor vor, erhitzt unter Rühren auf die gewünschte Polymerisationstemperatur und dosiert die restliche Monomerenmischung und den Initiator und gegebenenfalls Coinitiator sowie Regler innerhalb von 1 bis 10 Stunden, vorzugsweise 2 bis 5 Stunden, gleichmäßig zu. Es ist dabei zweckmäßig, den Initiator sowie den Coinitiator getrennt in Form von Lösungen in einer kleinen Menge eines geeigneten Lösungsmittels zuzudosieren. Der Kondensationsschritt kann anschließend in der Schmelze erfolgen. Das Endprodukt kann dann direkt als erstarrte Schmelze oder nach Aufnahme in einem geeigneten Lösungsmittel der Rohölemulsion zugesetzt werden.
   Eine weitere einfache Methode zur Herstellung der erfindungsgemäßen Polymerisate ist die Lösungspolymerisation. Sie wird durchgeführt in Lösungsmitteln, in denen die Monomeren und die gebildeten Copolymeren löslich sind. Es sind hierfür alle Lösungsmittel geeignet, die diese Vorgabe erfüllen und die mit den Monomeren keine Reaktion eingehen.
   Beispielsweise sind dies Toluol, Xylol, Ethylbenzol, Cumol, hochsiedende Aromatengemische wie z.B. Solvesso® 100, 150 und 200, aliphatische und cycloaliphatische Kohlenwasserstoffe wie z.B. n-Hexan, Cyclohexan, Methylcyclohexan, n-Octan, iso-Octan, Paraffinöle, Shellsol® TD, T und K sowie Aceton, Cyclohexanon, Tetrahydrofuran und Dioxan, wobei zur Erzielung niedermolekularer Copolymerer Tetrahydrofuran und Dioxan besonders gut geeignet sind.
   Da die Demulgatoren für Rohölemulsionen grenzflächenaktive Substanzen sind, die in der kontinuierlichen Phase (Ölphase) der Rohölemulsion löslich sein sollen, ist es zweckmäßig, ein Lösungsmittel zur Polymerisation zu wählen, welches mit der Emulsion verträglich ist, so daß die Demulgatorlösung der Emulsion direkt zugesetzt werden kann. Die Lösungspolymerisation ist die bevorzugte Herstellungsform für die erfindungsgemäßen Copolymerisate.
   Bei der Durchführung der Lösungspolymerisation ist es zweckmäßig, Lösungsmittel, Alkoxilat und einen Teil der Monomerenmischung (z.B. ca. 5 bis 20 %) vorzulegen und den Rest der Monomerenmischung mit dem Initiator und gegebenenfalls Coinitiator, Regler und Lösungsmittel zuzudosieren. Die Monomeren können auch einzeln, mit unterschiedlicher Geschwindigkeit zudosiert werden. Dies empfiehlt sich bei Monomeren mit stark unterschiedlicher Reaktivität und wenn eine besonders gleichmäßige Verteilung des weniger reaktiven Monomeren gewünscht wird. Dabei wird das weniger reaktive Monomer schneller und das reaktivere Monomer langsamer zudosiert. Es ist auch möglich, die gesamte Menge eines Monomeren, vorzugsweise des weniger reaktiven Monomeren, vorzulegen und nur das reaktivere zuzudosieren. Schließlich ist es auch möglich, die gesamten Monomeren, das Alkoxilat und das Lösungsmittel vorzulegen und nur den Initiator und gegebenenfalls Coinitiator und Regler zuzudosieren ("Batch"-Fahrweise). Bei der Durchführung dieser Fahrweise in größerem Maßstab können jedoch Probleme mit der Wärmeabführung auftreten, so daß diese Fahrweise nur bei geringen Konzentrationen der zu polymerisierenden Monomeren angewendet werden sollte. Die Konzentrationen der zu polymerisierenden Monomeren liegen zwischen 5 und 80 Gew.-%, bevorzugt 10 und 50 Gew.-%.
C) Der Kondensationsschritt
   Im Kondensationsschritt wird ein Teil der freien Hydroxylgruppen des Alkoxilats mit einem Teil der reaktiven Gruppen des Polymerisats aus den vinylischen Monomeren (z.B. Acrylsäure oder deren Ester) umgesetzt. Dadurch kommt es zu Verbrückungen, wodurch sehr wirksame Demulgatoren gebildet werden. Die Zusammensetzung des Alkoxilats, der vinylischen Monomeren und die Reaktionsbedingungen müssen dabei so gewählt werden, daß vollständig öllösliche Endprodukte erhalten werden. Im Kondensationsschritt dürfen deshalb auch nicht alle Hydroxylgruppen des Alkoxilats umgesetzt werden, wobei sich unlösliche Produkte bilden würden, vielmehr genügen meist geringe Umsätze, um den gewünschten Effekt zu erzielen.
   Die bevorzugte Reaktion beim Kondensationsschritt ist die Veresterung.
   Die Kondensation wird in der Regel bei Temperaturen zwischen 80 und 250°C, bevorzugt 100 und 200°C und besonders bevorzugt zwischen 120 und 180°C innerhalb von 0,5 bis 10 Stunden, bevorzugt 1 bis 8 Stunden und besonders bevorzugt 2 bis 6 Stunden in der Schmelze oder in Lösung durchgeführt. Liegt die Siedetemperatur des Lösungsmittels unterhalb der gewünschten Kondensationstemperatur, wird die Kondensation unter Druck durchgeführt.
   Zur Durchführung des Kondensationsschritts wird die Reaktionsmischung, bestehend aus Alkoxilat und Polymerisat aus vinylischen Monomeren und gegebenenfalls Lösungsmittel, auf die gewünschte Temperatur gebracht. In manchen Fällen ist es zweckmäßig, niedermolekulare Reaktionsprodukte (z.B. Wasser oder niedermolekulare Alkohole) aus dem Reaktionsgefäß zu entfernen. Dies kann z.B. dadurch erfolgen, daß man ein inertes Gas über die Polymerschmelze leitet oder durch Verwendung eines Schleppmittels. Soll z.B. Wasser aus der Reaktionsmischung entfernt werden, eignen sich als Schleppmittel die üblichen, mit Wassser ein Azeotrop bildenden organischen Lösungsmittel, insbesondere Xylol oder Toluol. Die Kondensation kann durch Zusatz von Katalysatoren, insbesondere saueren Katalysatoren wie Schwefelsäure, p-Toluolsulfonsäure, Dodecylbenzolsulfonsäure, Salzsäure oder sauren Ionenaustauschern, beschleunigt werden. Wird Katalysatorsäure zugesetzt, muß diese nach Beendigung des Kondensationsschritts neutralisiert werden. Dazu eignen sich prinzipiell alle basischen Verbindungen. Vorzugsweise werden jedoch Amine wie Triethylamin, Ethylhexylamin, Tributylamin, Morpholin, Piperidin oder Ethanolamine verwendet. Dabei wird mindestens die zur Neutralisation der Katalysatorsäure nötige, stöchiometrische Menge Base zugesetzt. Es kann aber auch eine größere Basenmenge zugesetzt werden. In diesem Fall erfolgt auch die partielle oder vollständige Neutralisation der restlichen von den vinylischen Monomeren eingebrachten, sauren Gruppen, vor allem Carboxylgruppen, die aus der Acrylsäure stammen. Durch die richtige Wahl der Base und des Neutralisationsgrads kann die Wirksamkeit der Demulgatoren den Rohölemulsionen angepaßt werden.
   Die erfindungsgemäßen Polymerisate zeichnen sich sowohl durch bessere Wirksamkeit als auch erhöhte Lagerstabilität gegenüber den in der DE-OS 36 35 489 beschriebenen Demulgatoren aus, ohne daß die freien Hydroxylgruppen des Alkoxilats in Ether-, Ester- oder Urethangruppierungen überführt werden müssen. Eine solche Überführung kann auch bei den erfindungsgemäßen Polymerisaten durchgeführt werden, bringt jedoch hinsichtlich Wirksamkeit oder Stabilität keine weiteren Vorteile.
D) Modifikation des Polymeren aus B) und C) (fakultativ)
   Zur Wirkungssteigerung und Abstimmung auf das jeweilig zu behandelnde Rohöl kann eventuell eine nachträgliche Modifikation der unter B) und C) erhaltenen Copolymeren sinnvoll sein. Je nach verwendeten Comonomeren bei der Copolymerisation können folgende Veränderung des Produktes erfolgen:
   1) Abmischung mit einem alkoxilierten Alkohol oder einer Mischung aus mehreren alkoxilierten Alkoholen wie sie unter A) beschrieben erhalten werden oder mit anderen Copolymeren aus B) und C) im Verhältnis 10 : 90 bis 90 : 10, bevorzugt 50 : 50 bis 80 : 20.
      Bessere Wirksamkeiten können darüberhinaus auch durch Zusatz sogenannter Cotenside zu den Copolymeren in Gewichtsmengen von 5 bis 30 Gew.-% erzielt werden. Solche Cotenside können z.B. Dodecylhydrogensulfat, Alkylbenzolsulfonate oder Alkylnaphthalinsulfonate sein.
   2) Eine Molekulargewichtssteigerung kann durch nachträgliche Vernetzung mit multifunktionellen Verknüpfungsreagentien erfolgen, welche mit reaktiven Gruppen des Copolymeren reagieren. Dabei werden die Vernetzungen (abhängig vom Vernetzertyp) mit 0,1 bis 10 Gew.-%, bevorzugt 1 bis 4 Gew.-%, an multifunktioneller Komponente bei Temperaturen von 80 bis 140°C durchgeführt. Als multifunktionelle Vernetzer werder z.B. je nach verwendeten Comonomeren eingesetzt: Bisglycidylether (bevorzugt Bisglycidylether von Bisphenol A), multifunktionelle Alkohole (z.B. Sorbit, Ethylenglykol), Diisocyanate (z.B. Toluoldiisocyanat) und vergleichbare Verbindungen, welche sich mit reaktiven Stellen am Copolymeren umsetzen.
   3) Nachoxalkylierung mit einem Alkoxid, einer Mischung mehrerer Alkoxide oder blockweise mit verschiedenen Alkoxiden. Dabei werden die Copolymere aus B) und C) mit basischen Katalysatoren (bevorzugt Natriumhydroxid, Kaliumhydroxid) in Mengen von 0,5 bis 5 Gew.-% bei Temperaturen von 100 bis 150°C mit dem Alkoxid(en) umgesetzt. Als Alkoxide werden bevorzugt Ethylenoxid, Propylenoxid oder 1,2-Butylenoxid angewendet, wobei das Verhältnis zwischen Copolymer und Alkoxid zwisch 5 : 95 bis 95 : 5 variiert.
   4) Quaternisierung von N-haltigen Copolymeren mit bekannten Quaternisierungsmitteln, wie Dimethylsulfat oder Methyljodid bei Temperaturen von 50 bis 120°C. Dabei kann eine vollständige oder nur teilweise Quaternisierung der vorhandenen Aminfunktionen erfolgen.
Es besteht keine Beschränkung auf alleinige Anwendung einer Modifikation auf das Copolymere aus C). Vielmehr können beliebige Veränderungen gemäß 1) bis 4) nacheinander durchgeführt werden.

Die erfindungsgemäßen Polymerisate können auch in Abmischung mit anderen Demulgatoren, z.B. auf Basis alkoxilierter Amine eingesetzt werden.

Die K-Werte (nach H. Fikentscher, Cellulosechemie Band 13, Seiten 58 bis 64, und 71 bis 74 (1932), bestimmt in 2 %iger (Gew./Vol.) xylolischer Lösung) der erfindungsgemäßen Polymerisate liegen zwischen 10 und 50, vorzugsweise zwischen 10 bis 40 und besonders bevorzugt zwischen 13 und 30.

Die erfindungsgemäßen Additive werden den Erdölemulsionen in Mengen von 0,5 bis 1000 ppm, bevorzugt 1 bis 200 ppm, zugesetzt.

Die Erfindung wird durch die folgenden Beispiele erläutert:

Die Alkoxilate können z.B. wie in der DE 36 35 489-A1 beschrieben hergestellt werden. In den folgenden Beispielen bedeuten:
A1:Blockcopolymerisat aus 1 Mol Propylenglykol, umgesetzt mit (im Mittel) 30,0 Mol Propylenoxid, dann mit (im Mittel) 10,4 Mol Ethylenoxid.
A2:Blockcopolymerisat aus 1 Mol Propylenglykol, umgesetzt mit (im Mittel) 47,4 Mol Propylenoxid, dann mit (im Mittel) 20,0 Mol Ethylenoxid (= Beispiel a3 aus DE-OS 36 35 489).
A3:Blockcopolymerisat aus 1 Mol Propylenglykol, umgesetzt mit (im Mittel) 20,5 Mol Propylenoxid, dann mit (im Mittel) 11,6 Mol Ethylenoxid.
A4:Blockcopolymerisat aus 1 Mol Trimethylolpropan, umgesetzt mit (im Mittel) 80,0 Mol Propylenoxid, dann mit (im Mittel) 30,3 Mol Ethylenoxid (= Beispiel a15 aus DE-OS 36 35 489).
A5:Poly-Tetrahydrofuran mit Molgewicht ca. 2000 g/Mol.

### Herstellung der erfindungsgemäßen Polymerisate

### Beispiel 1

In einem Reaktor, der versehen war mit Rührer, Heizung und Zulaufvorrichtung wurde eine Lösung von 152 g Alkoxilat A1 in 126 g Xylol im schwachen Stickstoffstrom auf 70°C erhitzt und innerhalb von 2 Stunden eine Lösung von 30 g Acrylsäure in 30 g Xylol und gleichzeitig eine Lösung von 0,6 g AIBN (Azobisisobutyronitril) in 26 g Xylol gleichmäßig zudosiert. Danach wurde noch eine Stunde bei 70°C nachgeheizt. Man erhielt eine weißlichtrübe, ca. 50 %ige Polymerlösung vom K-Wert 20.3.

Diese Polymerlösung wurde mit 0,8 g p-Toluolsulfonsäure versetzt und zwei Stunden zum Sieden unter Rückfluß (140°C) erhitzt. Danach wurde auf 40°C abgekühlt und 0,7 g Morpholin zugegeben.

### Beispiel 2

Wie Beispiel 1, jedoch mit Alkoxilat A2. Man erhielt eine milchig-transparente, ca. 50 gew.-%ige Polymerlösung vom K-Wert 21.5. Die Kondensation erfolgt analog Beispiel 1.

### Beispiel 3

Wie Beispiel 1, jedoch mit Alkoxilat A3. Man erhielt eine durchscheinende, ca. 50 %ige Polymerlösung vom K-Wert 19.8. Die Kondensation wurde nach Zusatz von p-Toluolsulfonsäure durch zweistündiges azeotropes Abdestillieren von Wasser durchgeführt. Die Neutralisation der Katalysatorsäure erfolgte durch Zugabe einer äquimolaren Menge Triethanolamin.

### Beispiel 4

Wie Beispiel 1, jedoch wurde anstelle von Alkoxilat A1 der Polyether A5 eingesetzt sowie 54 g Acrylsäure und 1,3 g AIBN zur Polymerisation verwendet. Man erhielt eine weißlich trübe, ca. 50 gew.%ige Polymerlösung vom K-Wert 24.2. Die Kondensation und Neutralisation wurde analog Beispiel 1 durchgeführt.

### Beispiel 5

In einem Reaktor gemäß Beispiel 1 wurden 190 g Alkoxilat A4, 159 g Xylol, 27 g Acrylsäure und 1 g p-Toluolsulfonsäure vorgelegt und unter Rühren und Durchleiten von Stickstoff auf 70°C erhitzt. Dann wurden 1,5 g AIBN in 60 g Xylol gleichmäßig innerhalb von 2 Stunden zudosiert, eine Stunde bei 70°C nacherhitzt und weitere 3 Stunden unter Rückfluß am Sieden gehalten. Nach Abkühlen auf Raumtemperatur wurde mit 1,5 g Tri-n-Butylamin versetzt. Es wurde eine bräunliche, transparente, ca. 50 %ige Polymerlösung vom K-Wert 19.2 erhalten.

### Beispiel 6

In einem Reaktor gemäß Beispiel 1 wurden 100 g Alkoxilat A4, 14,2 g Acrylsäure und 0,53 g p-Toluolsulfonsäure unter Rühren und Durchleiten von Stickstoff auf 65°C erhitzt und mit 100 mg AIBN versetzt. Nach wenigen Minuten stieg die Temperatur bis auf 77°C an. Nach Abklingen der exothermen Reaktion wurde bei 70°C gehalten und weitere 200 mg AIBN zugegeben. Es wurde noch 1 Stunde bei 70°C gehalten, dann 1 Stunde auf 135 bis 140°C erhitzt. Die zähe Polymerschmelze wurde nach dem Abkühlen auf 50°C in der gleichen Menge Solvesso^{®} 150 (hochsiedendes Aromatengemisch) und 2 g Morpholin aufgenommen.

### Beispiel 7

Analog Beispiel 1, jedoch mit Alkoxilat A4 und Solvesso^{®} 150 als Lösungsmittel. Zur Kondensation wurde 2 Stunden auf 160°C erhitzt.

In den Beispielen 8 bis 21 wurde analog zu den in der letzten Spalte der Tabelle 1 angegebenen Beispielen vorgegangen.

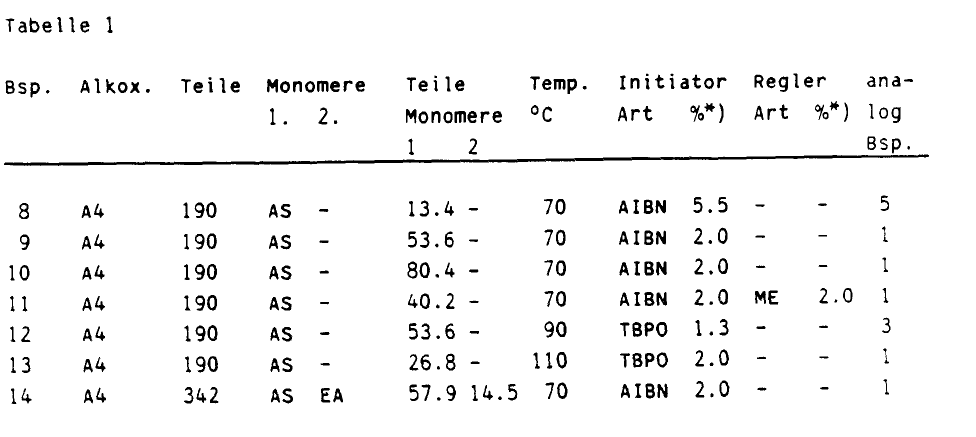

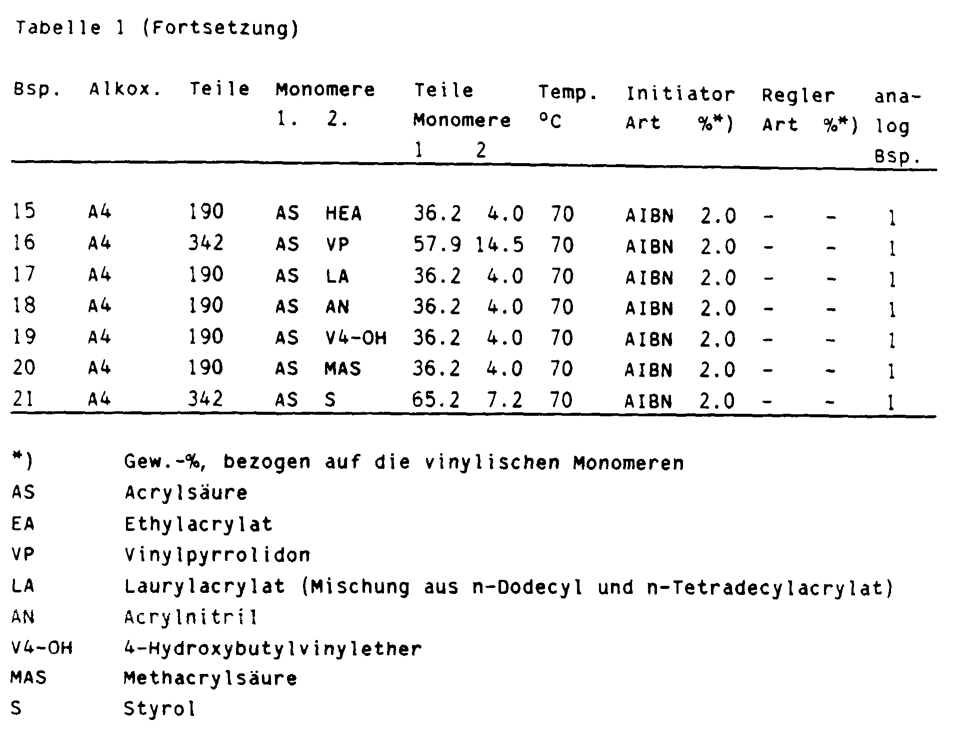

### Beispiel 22

In einem Reaktor gemäß Beispiel 1 wurden 65 g Alkoxilat A4, 81 g Xylol, 0,35 g p-Toluolsulfonsäure und 32,2 g einer 50,5 gew.-%igen, wäßrigen Lösung eines Copolymeren aus 50 Teilen Acrylsäure und 50 Teilen Maleinsäure vom Molgewicht 3000 g/Mol zum Sieden erhitzt und azeotrop im Verlauf von 2 Stunden ca. 16,5 g Wasser ausgekreist. Es wurde mit Xylol auf 35 Gew.-% verdünnt und eine weitere Stunde Wasser ausgekreist. Durch Verdünnen mit Xylol auf ca. 10 Gew.-% wurde eine klare, gelbliche Lösung erhalten.

### Vergleichsbeispiel (Beispiel B18 aus DE 36 35 489-A1)

1. Herstellung des Esters (Beispiel A15)
   In einem Reaktor gemäß Beispiel 1 wurden 426,3 g Alkoxilat A4, 5,53 g Acrylsäure, 5,53 g p-Toluolsulfonsäure, 85 mg Hydrochinonmonomethylether und 187,6 g Xylol drei Stunden zum Sieden erhitzt, wobei das Reaktionswasser durch azeotrope Destillation entfernt wurde. Man erhielt eine klare, braune Lösung. Die Säurezahl betrug 3,9 mg KOH/g.
2. Copolymerisation mit Acrylsäure (Beispiel B18)
   In einem Reaktor gemäß Beispiel 1 wurden 223,3 g des Esters aus 1., 23,95 g Acrylsäure, 113 mg AIBN und 113,2 g xylol unter Durchleiten von Stickstoff auf 80°C erhitzt und drei Stunden bei dieser Temperatur gehalten. Danach wurde zwei Stunden bei 110°C nachgeheizt, auf 30°C abgekühlt und mit 1,96 g Tri-n-butylamin versetzt. Es wurde eine gelb-braune, klare, viskose Polymerlösung vom K-Wert 28.5 erhalten.

Die erfindungsgemäßen Polymerisate wurden anhand verschiedener Rohölemulsionen getestet. Dazu wurde die entsprechende Demulgatormenge der Emulsion unter Rührer zugegeben und die Wasserabscheidung in einem Meßzylinder zeitlich verfolgt. Die zur optimalen Emulsionsspaltung erforderliche Temperatur wurde durch Einstellen der Meßzylinder in ein thermostatiertes Wasserband erreicht. Die in den Tabellen 2 und 3 angegebenen Zahlenwerte entsprechen der prozentual abgespaltenen Wassermenge, bezogen auf den Gesamtwassergehalt der Emulsion (= 100 %).

### Rohölemulsion I

Herkunft: Rühlermoor/Georgsdorf
Wassergehalt: 47 Vol.%
Demulgiertemperatur: 50°C

**Tabelle 2**

| Produkte aus Beispiel | Dosierung (ppm) | abgespaltene Wassermenge in % nach | | | | | | |
|---|---|---|---|---|---|---|---|---|
| | | Minuten | | | | Stunden | | |
| | | 10 | 20 | 30 | 45 | 1 | 2 | 4 |
| 1 | 8 | 0 | 0 | 0 | 7 | 24 | 49 | 70 |
| 2 | 5 | 2 | 21 | 69 | 94 | 96 | 99 | 100 |
| 5 | 6 | 2 | 10 | 28 | 74 | 88 | 98 | 100 |
| 6 | 8 | 0 | 2 | 5 | 13 | 45 | 71 | 89 |
| 12 | 10 | 0 | 2 | 18 | 67 | 97 | 99 | 100 |
| 14 | 3 | 2 | 10 | 20 | 88 | 94 | 97 | 100 |
| 17 | 5 | 2 | 7 | 20 | 68 | 91 | 96 | 99 |
| Vergl.Bsp. | 10 | 0 | 0 | 0 | 0 | 3 | 5 | 8 |

### Rohölemulsion II

- Herkunft:: Adorf/Scherhorn
- Wassergehalt:: 51 Vol.%
- Demulgiertemperatur:: 50°C

**Tabelle 3**

| Produkte aus Beispiel | Dosierung (ppm) | abgespaltene Wassermenge in % nach | | | | | | |
|---|---|---|---|---|---|---|---|---|
| | | Minuten | | | | Stunden | | |
| | | 10 | 20 | 30 | 45 | 1 | 2 | 4 |
| 2 | 20 | 8 | 21 | 38 | 63 | 94 | 99 | 100 |
| 5 | 25 | 15 | 20 | 28 | 35 | 59 | 88 | 99 |
| 7 | 15 | 8 | 12 | 21 | 31 | 50 | 69 | 100 |
| 10 | 10 | 4 | 6 | 18 | 25 | 52 | 92 | 98 |
| 11 | 10 | 4 | 12 | 21 | 33 | 63 | 94 | 100 |
| 14 | 15 | 4 | 21 | 38 | 67 | 92 | 99 | 100 |
| 18 | 10 | 9 | 29 | 56 | 78 | 91 | 98 | 99 |
| Vergl.Bsp. | 25 | 0 | 0 | 0 | 5 | 9 | 14 | 21 |

Aus den in den Tabellen 2 und 3 aufgeführten Werten erkennt man die gute Wirksamkeit der erfindungsgemäßen Polymerisate als Demulgatoren für Rohölemulsionen. Kennzeichnend ist die niedrige Dosierung und die kurze Spaltzeit. Das Vergleichsprodukt weist eine wesentlich schlechtere Wirksamkeit bei ähnlicher Dosierung auf.

## Patentansprüche

1. Reaktionsprodukte aus Alkoxilaten und vinylischen Monomeren, erhalten durch
a) Polymerisation von einem oder mehreren vinylischen Monomeren der allgemeinen Formel I 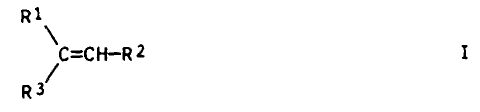 in der R¹ Wasserstoff oder die Reste -COOH, -COOC₂H₅OH, -COOC₃H₇OH, -COO-R⁴-N(R⁵)₂, -CO-NH-R⁴-N(R⁵)₂, -CONH₂, -CN, -Phenyl, -O-CO-R⁴, -Pyridyl, 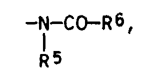 -COCH₃, -COOR⁷, -O-R⁷, -O-R⁷-OH, -R⁷, -Imidazoyl, 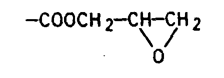
R² Wasserstoff oder -COOH bedeuten und R¹ und R² zusammen einen Anhydridring bilden können,
R³ Wasserstoff oder CH₃, wobei R¹, R² und R³ nicht gleichzeitig Wasserstoff sind,
R⁴ eine Alkyl- oder Alkylengruppe mit 1 bis 4 C-Atomen
R⁵ und R⁶ unabhängig voneinander Wasserstoff oder eine C₁-C₄-Alkylgruppe, wobei R⁵ und R⁶ zusammen auch einen 5-6gliedrigen Ring bilden können, und
R⁷ eine Alkyl-, Hydroxialkyl- oder Alkylengruppe mit 1 bis 30 C-Atomen bedeuten,
in Gegenwart von einem oder mehreren Alkoxilaten der allgemeinen Formel II
R⁸-O-[R⁹-O]ₓ-H II
in der R⁸ den Rest eines ein- oder mehrwertigen Alkohols, Phenols oder Alkylphenols mit 1-30 C-Atomen oder den Rest eines Alkylphenol/Formaldehyd- oder Alkyphenol/Acetaldehyd-Kondensationsproduktes, R⁹ eine Ethylen-, Propylen-, 1,2-Butylen- oder 1,4-Butylengruppe und x eine Zahl zwischen 5 und 120 bedeutet, wobei innerhalb der Polyalkylenoxidketten verschiedene Einheiten [R⁹-O] gemäß obiger Bedeutung von R⁹ in Form von Blöcken oder als statistische Mischungen vorliegen können und x sich auf die Gesamtzahl aller Einheiten [R⁹-O] bezieht
und anschließender Kondensation
oder
b) Polymerisation von einem oder mehreren vinylischen Monomeren der oben angegebenen allgemeinen Formel I und Kondensation des erhaltenen Copolymerisats mit einem oder mehreren Alkoxilaten der oben angegebenen allgemeinen Formel II,
wobei in jedem Fall
- die vinylischen Monomeren zu mindestens 20 Gew.-% funktionelle Gruppen tragen, die nach der erfolgten Polymerisation mit den Hydroxylgruppen der Alkoxilate eine chemische Reaktion eingehen können,
- die Kondensation so geführt wird, daß nicht alle Hydroxylgruppen umgesetzt werden, und
- das Gewichtsverhältnis von Alkoxilaten II zur Summe der vinylischen Monomeren I zwischen 300 : 1 und 1 : 50 liegt.

2. Reaktionsprodukte nach Anspruch 1, dadurch gekennzeichnet, daß das vinylische Monomer der allgemeinen Formel I Acrylsäure, Methacrylsäure, Ester oder Amide der Acrylsäure oder Methacrylsäure, Vinylether, Acrylnitril, Vinylpyrrolidon oder eine Mischung aus diesen Monomeren ist.

3. Reaktionsprodukte nach Anspruch 1 oder 2, dadurch gekennzeichnet, daß das vinylische Monomer der allgemeinen Formel I zu 50 bis 100 Gew.-% aus Acrylsäure besteht.

4. Reaktionsprodukt nach Anspruch 1, dadurch gekennzeichnet, daß in der allgemeinen Formel II R⁹ für einen Ethylen- und Propylenrest steht.

5. Mischungen, enthaltend Reaktionsprodukte gemäß Anspruch 1 und gegebenenfalls Tenside, Lösungsmittel und/oder weitere Demulgatoren.

6. Verfahren zur Herstellung der Reaktionsprodukte nach den Ansprüchen 1 bis 4, gekennzeichnet durch
a) Polymerisation von einem oder mehreren vinylischen Monomeren der allgemeinen Formel I gemäß den Ansprüchen 1 bis 3 in Gegenwart von einem oder mehrere Alkoxilaten der allgemeinen Formel II gemäß den Ansprüchen 1 und/oder 4 und anschließender Kondensation
oder
b) Polymerisation von einem oder mehreren vinylischen Monomeren der allgemeinen Formel I gemäß den Ansprüchen 1 bis 3 und Kondensation des erhaltenen Copolymerisats mit einem oder mehreren Alkoxilaten der allgemeinen Formel II gemäß den Ansprüchen 1 und/oder 4,
wobei in jedem Fall
- die vinylischen Monomeren zu mindestens 20 Gew.-% funktionelle Gruppen tragen, die nach der erfolgten Polymerisation mit den Hydroxylgruppen der Alkoxilate eine chemische Reaktion eingehen können,
- die Kondensation so geführt wird, daß nicht alle Hydroxylgruppen umgesetzt werden, und
- das Gewichtsverhältnis von Alkoxilaten II zur Summe der vinylischen Monomeren I zwischen 300 : 1 und 1 : 50 liegt.

7. Verwendung der Reaktionsprodukte gemäß den Ansprüchen 1 bis 4 oder der Mischung gemäß Anspruch 5 als Demulgatoren für Rohölemulsionen.

## Claims

1. A reaction product of alkoxylates and vinyl monomers, obtained by
a) polymerization of one or more vinyl monomers of the formula I 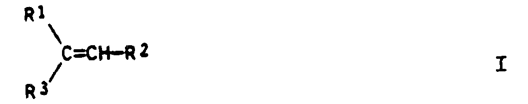 where R¹ is hydrogen, -COOH, -COOC₂H₅OH, -COOC₃H₇OH, -COO-R⁴-N(R⁵)₂, -CO-NH-R⁴-N(R⁵)₂, -CONH₂, -CN, -phenyl, -O-CO-R⁴, -pyridyl, 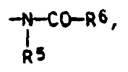 -COCH₃, -COOR⁷, -O-R⁷, -O-R⁷-OH, -R⁷, -imidazoyl or 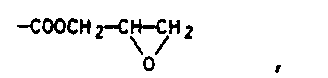
R² is hydrogen or -COOH, and R¹ and R² together may form an anhydride ring,
R³ is hydrogen or CH₃, and R¹, R² and R³ are not simultaneously hydrogen,
R⁴ is an alkyl or alkylene group of 1 to 4 carbon atoms,
R⁵ and R⁶ independently of one another are each hydrogen or C₁-C₄-alkyl, and R⁵ and R⁶ together may furthermore form a 5-membered or 6-membered ring, and
R⁷ is an alkyl, hydroxyalkyl or alkylene group of 1 to 30 carbon atoms,
in the presence of one or more alkoxylates of the formula II
R⁸-O-[R⁹-O]ₓ-H II
where R⁸ is a radical of a monohydric or polyhydric alcohol, a phenol or alkylphenol of 1 to 30 carbon atoms or a radical of an alkylphenol/formaldehyde or alkylphenol/acetaldehyde condensate, R⁹ is ethylene, propylene, 1,2-butylene or 1,4-butylene and x is from 5 to 120, and within the polyalkylene oxide chains different units [R⁹-O] according to the above meaning of R⁹ may be present in the form of blocks or as random mixtures and x relates to the total number of all units [R⁹-O],
and subsequent condensation
or
b) polymerization of one or more vinyl monomers of the abovementioned formula I and
condensation of the resulting copolymer with one or more alkoxylates of the abovementioned formula II,
where in each case
the vinyl monomers carry not less than 20% by weight of functional groups capable of undergoing a chemical reaction with the hydroxyl groups of the alkoxylates after the polymerization is complete,
the condensation is carried out so that not all hydroxyl groups are converted, and
the weight ratio of alkoxylates II to the sum of the vinyl monomers I is from 300 : 1 to 1 : 50.

2. A reaction product as claimed in claim 1, wherein the vinyl monomer of the formula I is acrylic acid, methacrylic acid, an ester or amide of acrylic acid or methacrylic acid, vinyl ether, acrylonitrile, vinylpyrrolidone or a mixture of these monomers.

3. A reaction product as claimed in claim 1 or 2, wherein the vinyl monomer of the formula I contains from 50 to 100% by weight of acrylic acid.

4. A reaction product as claimed in claim 1, wherein, in the formula II, R⁹ is ethylene or propylene.

5. A mixture containing a reaction product as claimed in claim 1 and, if required, surfactants, solvents and/or further demulsifiers.

6. A process for the preparation of a reaction product as claimed in any of claims 1 to 4, comprising
a) polymerization of one or more vinyl monomers of the formula I as claimed in any of claims 1 to 3 in the presence of one or more alkoxylates of the formula II as claimed in claim 1 and/or 4 and subsequent condensation
or
b) polymerization of one or more vinyl monomers of the formula I as claimed in any of claims 1 to 3 and condensation of the resulting copolymer with one or more alkoxylates of the formula II as claimed in claim 1 and/or 4,
where in each case
the vinyl monomers carry not less than 20% by weight of functional groups capable of undergoing a chemical reaction with the hydroxyl groups of the alkoxylates after the polymerization is complete,
the condensation is carried out so that not all hydroxyl groups are converted, and
the weight ratio of alkoxylates II to the sum of the vinyl monomers I is from 300 : 1 to 1 : 50.

7. The use of a reaction product as claimed in any of claims 1 to 4 or of a mixture as claimed in claim 5 as a demulsifier for crude oil emulsions.

## Revendications

1. Produits de réaction d'alcoxylates et de monomères vinyliques, obtenus par
a) polymérisation d'un ou de plusieurs monomères vinyliques de formule générale I 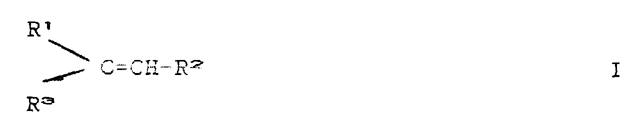 dans laquelle R¹ représente un atome d'hydrogène ou l'un des restes -COOH, -COOC₂H₅OH, -COOC₃H₇OH, -COO-R⁴-N(R⁵)₂, -CO-NH-R⁴-N(R⁵)₂, -CONH₂, -CN, -phényle, -O-CO-R⁴, -pyridyle, 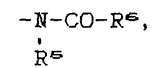 -COCH₃, -COOR⁷, -O-R⁷, -O-R⁷-OH, -R⁷, -imidazolyle, 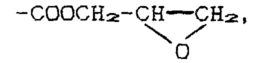
R² représente un atome d'hydrogène ou -COOH, et R¹ et R² peuvent former ensemble un cycle anhydride,
R³ représente un atome d'hydrogène ou CH₃, R¹, R² et R³ n'étant pas en même temps des atomes d'hydrogène,
R⁴ représente un groupement alkyle ou alkylène à 1-4 atomes de carbone,
R⁵ et R⁶ représentent chacun, indépendamment l'un de l'autre, un atome d'hydrogène ou un groupement alkyle en C₁-C₄, R⁵ et R⁶ pouvant aussi former ensemble un cycle à 5-6 chaînons, et
R⁷ représente un groupement alkyle, hydroxyalkyle ou alkylène a 1-30 atomes de carbone,
en présence d'un ou de plusieurs alcoxylates de formule générale II
R⁸-O-[R⁹-O]ₓ-H II
dans laquelle R⁸ représente le reste d'un alcool, d'un phénol ou d'un alkylphénol à 1-30 atomes de carbone mono- ou polyvalent ou le reste d'un produit de condensation alkylphénol/formaldéhyde ou alkylphénol/acétaldéhyde, R⁹ représente un groupement éthylène, propylène, 1,2-butylène ou 1,4-butylène et x est un nombre de 5 à 120, des motifs [R⁹-O] différents (avec la signification susmentionnée de R⁹) pouvant être présents dans les chaînes de poly(oxyalkylène) sous forme de blocs ou en mélanges statistiques et x se rapportant au nombre total de tous les motifs [R⁹-O],
suivie de condensation
ou
b) polymérisation d'un ou de plusieurs monomères vinyliques répondant à la formule générale I indiquée ci-dessus, et condensation du copolymère obtenu avec un ou plusieurs alcoxylates répondant à la formule générale II indiquée ci-dessus,
étant spécifié dans chaque cas que
- les monomères vinyliques portent, à raison d'au moins 20% en poids, des groupements fonctionnels qui, après l'achèvement de la polymérisation, peuvent entrer en réaction chimique avec les groupements hydroxyle des alcoxylates,
- la condensation est menée de sorte que les groupements hydroxyle ne soient pas tous mis en réaction, et
- le rapport pondéral des alcoxylates II à la somme des monomères vinyliques I est compris entre 300:1 et 1:50.

2. Produits de réaction selon la revendication 1, caractérisés en ce que le monomère vinylique de formule générale I est l'acide acrylique, l'acide méthacrylique, un ester ou un amide de l'acide acrylique ou de l'acide méthacrylique, un oxyde de vinyle, l'acrylonitrile, la vinylpyrrolidone ou un mélange de ces monomères.

3. Produits de réaction selon la revendication 1 ou 2, caractérisés en ce que le monomère vinylique de formule générale I se compose d'acide acrylique pour 50 à 100% en poids.

4. Produits de réaction selon la revendication 1, caractérisés en ce que, dans la formule générale II, R⁹ est mis pour un reste éthylène ou propylène.

5. Mélanges contenant des produits de réaction selon la revendication 1 et éventuellement des tensio-actifs, des solvants et/ou d'autres désémulsifiants.

6. Procédé de préparation des produits de réaction selon l'une quelconque des revendications 1 à 4, caractérisé par
a) la polymérisation d'un ou de plusieurs monomères vinyliques de formule générale I selon l'une quelconque des revendications 1 à 3 en présence d'un ou de plusieurs alcoxylates de formule générale II selon les revendications 1 et/ou 4, suivie de condensation
ou
b) la polymérisation d'un ou de plusieurs monomères vinyliques de formule générale I selon l'une quelconque des revendications 1 à 3 et condensation du copolymère obtenu avec un ou plusieurs alcoxylates de formule générale II selon les revendications 1 et/ou 4,
étant spécifié dans chaque cas que
- les monomères vinyliques portent, à raison d'au moins 20% en poids, des groupements fonctionnels qui, après l'achèvement de la polymérisation, peuvent entrer en réaction chimique avec les groupements hydroxyle des alcoxylates,
- la condensation est menée de sorte que les groupements hydroxyle ne soient pas tous mis en réaction, et
- le rapport pondérai des alcoxylates II à la somme des monomères vinyliques I est compris entre 300:1 et 1:50.

7. Utilisation des produits de réaction selon l'une quelconque des revendications 1 à 4 ou du mélange selon la revendication 5 comme désémulsifiants pour des émulsions de pétrole brut.
